# EUROPEAN PATENT SPECIFICATION

(11) **EP 0 678 326 B1**
(45) Date of publication and mention of the grant of the patent: **24.07.2002**
(21) Application number: 95201026.2
(22) Date of filing: 21.04.1995
(51) Int. Cl.: B01D 61/14, B01D 65/02

(54) **Membrane filtration system, method for subjecting a liquid to membrane filtration, and method for cleaning such a membrane filtration system**
Membranfiltrationseinheit, Verfahren zum Behandeln eines Fluids mittels Membranfiltration und Verfahren zum Reinigen einer solchen Einheit
Dispositif de filtration par membrane, procédé de traitement d'un fluide par filtration par membrane et procédé de nettoyage d'un tel dispositif

(30) Priority: 22.04.1994 NL 9400647
(43) Date of publication of application: 25.10.1995
(73) Proprietor: X-Flow B.V., 7602 KK Almelo (NL)
(72) Inventor: Rekers, Casper Johannes Nicolaas, NL-7772 JV Hardenberg (NL)
(74) Representative: van der Kloet-Dorleijn, Geertruida W.F., Drs.

(56) References cited:
- EP-A- 0 207 379
- EP-A- 0 473 486
- WO-A-93/24212
- FR-A- 2 677 895

## Description

This invention relates to membrane filtration systems according to claims 1 and 2, and to methods according to claims 3 to 6.

In one aspect this invention relates to a membrane filtration system, comprising a series of membrane filtration modules, each of the membrane filtration modules having at least a housing, a semi-permeable membrane accommodated in the housing, a supply pipe for liquid to be filtered, which supply pipe connects to the housing at one side of the membrane, a concentrate discharge pipe which connects to the housing at the same side of the membrane, at the concentrate outflow-opening of the module, and a filtrate dicharge pipe which connects to the housing at the other side of the membrane, in which system the modules are connected in series with regard to the liquid to be filtered and are connected in parallel with regard to the filtrate.

Such a system is known as the "cross-flow membrane filtration system", and is used for less clear liquids which are more heavily membrane-soiling in nature. This system is characterized in that during the filtration the liquid to be filtered is conveyed along the membrane surface at a great velocity compared with the filtration velocity. The separated-out impurities are thus discharged continuously, and the build-up of a layer of impurities on the membrane surface is avoided. The liquid velocities in this known system generally lie between 1 and 5 m/sec, so that various pumps with high energy requirements are needed for maintaining such liquid velocities, while the system itself is quite complex, owing to the network of pipes.

A membrane filtration system of the type indicated above has now been found which, in addition to advantageous anti-soiling behaviour, uses less energy, owing to the simple construction of the system, which makes it particularly suitable for liquids which are moderately soiling types.

The membrane filtration system according to claim 1 is more particularly characterized in that the concentrate discharge pipe of the last membrane filtration module, viewed in the direction of flow of the liquid to be filtered, can be shut off, during the filtration cycle, which system further comprises: a feed pump (26) and a supply pipe connected thereto for feeding liquid to be filtered to the first module (27),
- a first valve (44a) in the concentrate discharge pipe of the last module (35),
- a filtrate collecting pipe (37) to which all filtrate discharge pipes of the modules are connected, which filtrate collecting pipe is connected to
- a product tank (39) for receiving the filtrate from said filtrate collecting pipe (37)
- a bypass pipe (no reference numeral) connected to the supply of the first module (27) and to the concentrate discharge pipe of the last module (35), upstream of the first valve (44a) in said concentrate discharge pipe,
- a valve (38) in the connection of the filtrate collecting pipe (37) to the product tank (39)
- a pump (40) in communication via a corresponding valve (41) to the filtrate collecting pipe (37) for feeding filtrate from the product tank (39) to the filtrate collecting pipe (37),
- a second valve (42) and a third valve (43a) in the supply pipe connected to the first module (27)
- the bypass pipe being connected to said supply pipe to the first module (27) between the second valve (42) and the third valve (43a)
- a fourth valve (44) in the concentrate discharge pipe of the last module (35) upstream of the connection of the bypass pipe.

Shutting off the concentrate discharge pipe of the last module during filtration ensures that at least all liquid supplied to said module has to pass through the membrane present in the module.

It is pointed out that a membrane filtration system consisting of one or more parallel membrane filtration modules connected in series, which system is such that all liquid supplied to the membrane filtration modules has to pass through the membrane of those modules, is known as the dead-end system.

The disadvantage of such a system is that the material retained by the membrane during the filtration process forms a gradually thickening layer on the membrane surface, with the result that this type of membrane filtration acquires the nature of a clogging filtration, and the flow through the membrane decreases as a function of the clogging. This type of membrane filtration is therefore generally used for clear liquids with a low degree of soiling. The advantage of this system is, however, the simple construction.

Surprisingly, it has now been found that the membrane filtration system according to the invention, as far as simple construction is concerned, is comparable to the known dead end system, but in addition has the advantageous anti-soiling behaviour of the cross-flow system.

These advantages are obtained through the fact that the membrane modules in the system according to the invention are arranged in such a way that during the filtration process, and viewed in the direction of flow of the liquid to be filtered, a number of modules are connected in series and possibly a number of these series in parallel. The first part of these modules works under cross-flow conditions, and the last module of each series under dead-end conditions.

Depending on the actual number of modules connected in series, it can be expedient to reduce in the direction of flow the number of series of modules to be used in parallel for the filtration.

The membrane filtration system according to the invention can also be cleaned in a very efficient and economically advantageous way, preferably using a part of the filtrate formed during membrane filtration, and a separate network of pipes is essentially superfluous.

The membrane filtration system according to the invention is more particularly characterized in that, for cleaning of the membrane filtration system, the supply pipe for liquid to be filtered in the first membrane filtration module, viewed in the direction of flow of said liquid, can be shut off, and the filtrate discharge pipes of all membrane filtration modules open out into a filtrate collecting pipe.

Beneficial use is thus made of the network of pipes of the membrane filtration system.

The direction of flow of the cleaning liquid flushed back through the membrane in this case corresponds at the concentrate side to that of the liquid to be filtered at the same side of the filtration. However, the first part of the modules placed in series is now operating under dead-end conditions, while the remaining modules are operating under cross-flow conditions. In this case the cross-flow which has arisen increases in velocity in the direction of the flow during filtration.

However, during the cleaning one may wish to make the first part of the modules connected in series operate under cross-flow conditions, and the last part of the modules connected in series operate under dead-end conditions. In order to make this possible, the membrane filtration system according to the invention also has a bypass pipe which can be shut off, lying between the liquid supply pipe of the first module and the concentrate discharge pipe of the last module of the modules connected in series.

According to a variant which is very attractive in practice, the membrane filtration system according to the invention is characterized in that each membrane filtration module present in the membrane filtration system is replaceable by a combination of several membrane filtration modules in which the liquid supply pipes and the concentrate discharge pipes respectively are connected in parallel and connect to the liquid supply pipe and the concentrate discharge pipe respectively of the system or an adjacent combination of membrane filtration modules, provided that, viewed in the direction of flow of the liquid to be filtered, each following combination of membrane filtration modules comprises the same or a lower number of modules.

The invention also relates to a method for subjecting a liquid to membrane filtration, using a membrane filtration system consisting of a series of membrane filtration modules in which each of the membrane filtration modules has at least a housing, a semi-permeable membrane accommodated in the housing, a supply pipe for liquid to be filtered, which supply pipe connects to the housing at one side of the membrane, a concentrate discharge pipe which connects to the housing at the same side of the membrane, and a filtrate discharge pipe which connects to the housing at the other side of the membrane, in which system the modules are connected in series with regard to the liquid to be filtered and are connected in parallel with regard to the filtrate.

Such a method is known as the cross-flow system. The liquid to be filtered is conveyed along the membrane surface at relatively great velocity compared with the filtration velocity. There are two systems of cross-flow principle: the circulation system consisting of several circulation loops, in which most of the liquid passes along the same membrane surface, and the single-pass system, in which the liquid passes along the total membrane surface once. This has the advantage that the build-up of a layer of dirt on the membrane surface can be prevented. However, additional measures are necessary for such a method, compared with a dead-end system, particularly in the form of pumps and pipes.

A method which overcomes such drawbacks has now been found.

The method according to claim 3 is characterized in that in operation the concentrate discharge pipe of the last membrane filtration module of the series, viewed in the direction of flow of the liquid to be filtered, is shut off in order to obtain an essentially dead-end situation in the abovementioned last membrane filtration module and an essentially cross-flow situation in at least the first membrane filtration module of the series.

So-called dead-end conditions are thus created in this last membrane filtration module. With little energy consumption a flow pattern comparable to that of the cross-flow system, and with an accompanying advantageous anti-soiling behaviour, is thus obtained in all the preceding membrane filtration modules.

By, on the contrary, reversing the direction of flow through the modules, i.e. supplying the liquid to the last module, so-called dead-end conditions are created in the first membrane filtration module. This is achieved more particularly through the fact that in operation the liquid supply pipe of the first membrane filtration module of the series, viewed in the direction of flow of the liquid to be filtered, is shut off, and the liquid to be filtered is supplied to the last module, in order to obtain an essentially dead-end situation in the abovementioned first membrane filtration module and an essentially cross-flow situation in at least the last membrane filtration module of the series.

The invention also relates to a method for cleaning a membrane filtration system consisting of a series of membrane filtration modules, each of the membrane filtration modules having at least a housing, a semi-permeable membrane accommodated in the housing, a supply pipe for liquid to be filtered, which supply pipe connects to the housing at one side of the membrane, a concentrate discharge pipe which connects to the housing at the same side of the membrane, and a filtrate discharge pipe which connects to the housing at the other side of the membrane, in which system the modules are connected in series with regard to the liquid to be filtered and are connected in parallel with regard to the filtrate, while the filtrate discharge pipes of all modules open out into a filtrate collecting pipe, whereby, for cleaning, the supply pipe for liquid to be filtered in the first membrane filtration module, viewed in the direction of flow of the liquid, is shut off, and the concentrate discharge pipe of the last membrane filtration module, viewed in the direction of flow of the liquid to be filtered, is opened, and filtrate is supplied through the filtrate collecting pipe to the membrane filtration modules, in order to remove the layer of built-up dirt by back-flushing the membrane with filtrate. The connection in series of the modules at the soiled (concentrate) side of the membrane filtration modules means that during the cleaning by the filtrate supply of each module the longitudinal flow velocity along the membranes increases in the direction of the main flow, from a very low value in the first module to a maximum velocity in the last module. The abovementioned first membrane filtration module in this case is essentially operating in a dead-end situation, while the remaining membrane filtration modules are essentially operating in a cross-flow situation. This means that the least soiled module during filtration, i.e. the first module during filtration, is cleaned least efficiently, but the most soiled module, i.e. the last module during filtration, is cleaned most efficiently.

According to an expedient variant, the direction of the main flow can be reversed during a second part of the back-flushing cycle. More particularly, the method according to this variant is characterized in that the membrane filtration system is provided with a bypass pipe which can be shut off, lying between the liquid supply pipe of the first module and the concentrate discharge pipe of the last module of the modules connected in series and, for cleaning, the supply pipe for liquid to be filtered in the first membrane filtration module is shut off, said bypass pipe is opened, the concentrate discharge pipe of the last membrane filtration module, viewed in the direction of flow of liquid to be filtered, is shut off, and filtrate is supplied through the filtrate collecting pipe to the membrane filtration modules, in order to obtain an essentially dead-end situation in the abovementioned last module and an essentially cross-flow situation in the abovementioned first module.

It is pointed out that the membrane to be used in the present invention is not particularly limited. For example, a hollow fibre membrane can be used, in which case during filtration the liquid to be filtered is either on the outside of the hollow fibre membrane or on the inside thereof, depending on the positioning in a module.

On the other hand, a capillary membrane can equally well be used, in which case during filtration the liquid to be filtered is either on the outside or on the inside of the capillary; or a tubular membrane can be used, in which case during filtration the liquid to be filtered is likewise either on the outside or on the inside of the tubular membrane.

Flat plate membranes or coiled membranes can also be used.

The invention is explained in greater detail with reference to the appended drawing, in which:
Fig. 1 shows a known membrane filtration system according to the dead-end principle;
Fig. 2 shows a membrane filtration system according to the cross-flow principle, of the circulation type;
Fig. 3 shows a membrane filtration system, likewise of the cross-flow principle, of the single-pass type;
Fig. 4 shows a membrane filtration system according to the invention; and
Fig. 5 shows another embodiment of a system according to the invention.

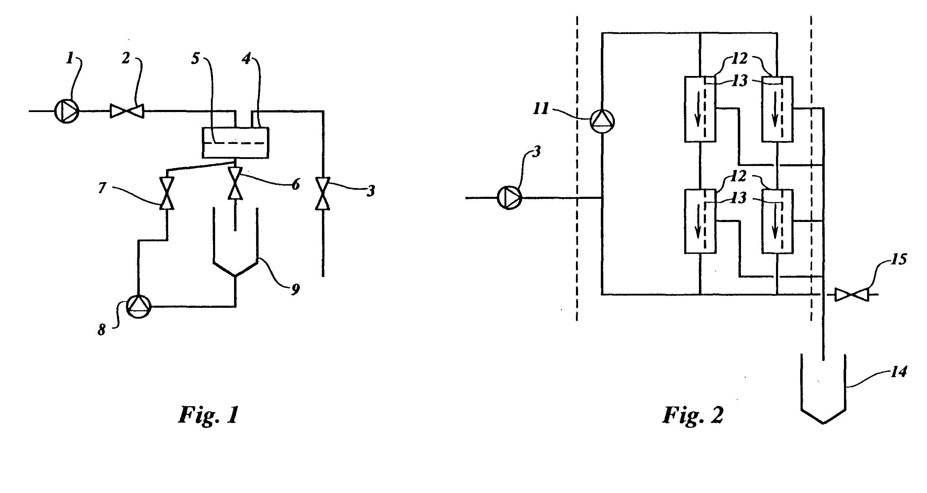

Figure 1 shows a filtration system of the so-called dead-end type. In this case during the production cycle liquid to be filtered is forced by pump 1 through valve 2 into the membrane filtration module 4. Membrane filtration module 4 is provided with a semi-permeable membrane 5 which allows through the liquid and retains the compounds to be removed. The filtered liquid leaves the membrane filtration module through valve 6 to product tank 9. The valves 3 and 7 are closed during the production cycle. All liquid supplied by the feed pump 1 passes through the membrane, while the main flow direction of the liquid is towards the membrane. During the cleaning cycle the valves 2 and 6 are closed and the valves 3 and 7 are opened. By means of pump 8, filtered liquid is used for flushing the membrane in the backward direction. The substances retained by the membrane are discharged through valve 3. Since the membrane forms the main resistance during the back-flushing with the filtered liquid, it will be clear that the back-flushing velocity achievable is of the same order of magnitude as the filtration velocity at the beginning of the filtration cycle. Apart from the feed pump, the dead-end system has only one other pump for back-flushing of the membranes, and is therefore a very simple system as regards construction.

A filtration system of the dead-end type is, however, unsuitable for liquids which are moderately to highly soiling, on account of the too rapid soiling of the membrane system.

Fig. 2 shows a circulation loop of a known cross-flow system of the circulation type.

Feed pump 3 in this system brings the liquid to pressure and injects it into a circulation loop consisting of a circulation pump 11 and a number of membrane filtration modules 12 provided with a semi-permeable membrane 13. The main flow direction in the membrane filtration modules is parallel to the membrane, and the velocity is a few orders of magnitudes greater than the filtration velocity through the membrane. The filtrate passing through the membrane is discharged to the product tank 14. The flow velocity in the modules consequently decreases slightly in the main flow direction. This decrease is kept as low as possible through selection of the number of modules and of the size of the circulation pump. A part of the concentrate with the substances retained by the membrane and entrained by the circulation flow is continuously discharged through valve 15. A full membrane filtration plant generally consists of a number of such types of circulation loops in series, each with their own circulation pump. The characteristic of a cross-flow system of the circulation type is that the liquid in such a system passes through a particular membrane filtration module several times.

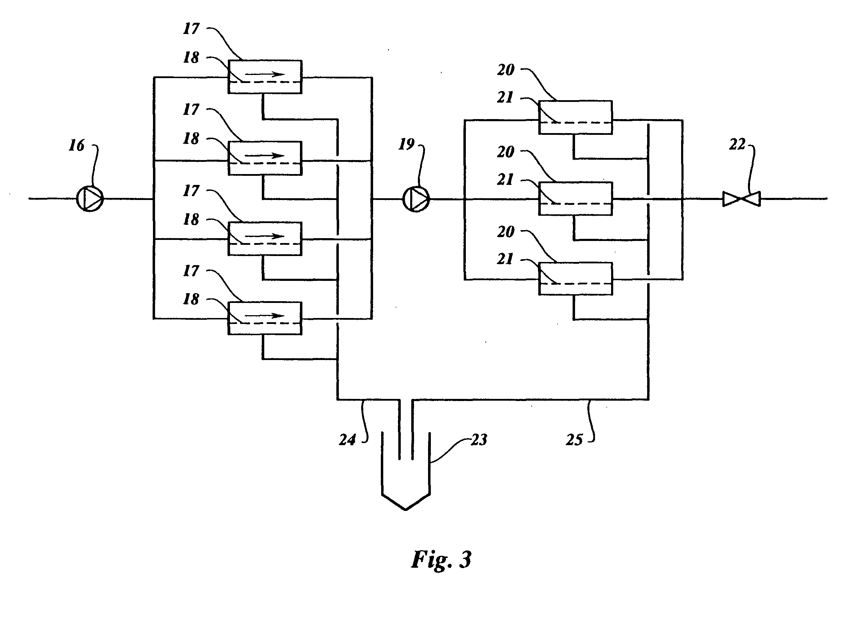

Another embodiment of the cross-flow system is shown in Figure 3, the so-called single-pass type.

More particularly, feed pump 16 feeds the liquid to be filtered to a first section with a number of first membrane filtration modules 17 which are connected in parallel and are each provided with a semi-permeable membrane 18. The filtrate from these modules is discharged through pipes 24 to product tank 23, the concentrate is brought to pressure again by booster pump 19 and fed to a following section, also with a number of membrane filtration modules connected in parallel and provided with a semi-permeable membrane 21. The filtrate is discharged through pipe 25 to product tank 23. The concentrate is discharged continuously through valve 22. In this system also, the main flow direction of the liquid in the membrane filtration modules is parallel to the membrane surface, and the velocity is orders of magnitude greater than the filtration velocity itself. In this embodiment of the cross-flow system the velocity in the main flow direction decreases through loss of filtrate. In such a system the number of parallel membrane filtration modules is therefore advantageously selected to be smaller in the second and any following sections than in the preceding section, in order to bring the flow velocity back to at least the region of that in the preceding section. In such a system the liquid to be filtered passes through a membrane filtration module only once. Such a type of system is therefore called a single-pass system. A complete single-pass system is generally made up of a number of steps, each with its own booster pump.

Cross-flow membrane filtration systems are excellent for more heavily membrane-soiling liquids, but by their nature they are more complex in construction than dead-end systems, and their energy consumption is also higher.

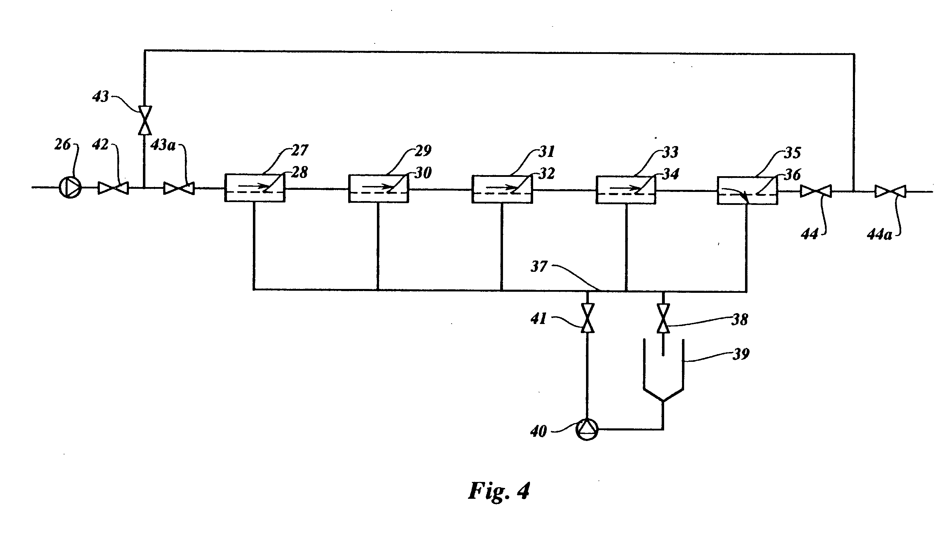

Fig. 4 shows diagrammatically the membrane filtration system according to the invention.

During production, feed pump 26 supplies the liquid to be filtered through valve 42 and 43a to a number of membrane filtration modules 27, 29, 31, 33 and 35, connected in series in the main flow direction, and each provided with a semi-permeable membrane 28, 30, 32, 34 and 36. During the production cycle, valves 41, 43, 44 and 44a are closed. The filtrate from each membrane filtration module is discharged to product tank 39 through a collecting pipe 37 and valve 38. The quantity of liquid flowing from module 27 to module 29 is equal to the supply to module 27 minus the quantity of filtrate produced by module 27. The membrane in module 27 is consequently operating under cross-flow conditions. The same applies to the membranes in modules 29, 31 and 33. Since valve 44 is closed during production, the membrane in module 35 is operating under dead-end conditions. The main flow velocity parallel to the membrane surface is therefore greatest in module 27 and decreases during production in the main flow direction from modules 27, 29, 31 and 33 to virtually zero in the last module 35.

It will be clear that the soiling rate increases in the same sequence through this decreasing longitudinal flow velocity and also increasing concentration of the substances to be separated out. At the end of the production cycle module 27 will be least soiled, and module 35 most soiled.

The direction of the main flow can expediently be reversed during production by closing valve 43a, opening valve 43, keeping valve 44a closed and opening valve 44 during production. The quantity of liquid flowing from module 35 to module 33 is equal to the supply to module 35 minus the quantity of filtrate produced by module 35. The membrane in module 35 is consequently operating under cross-flow conditions. The same applies to the membrane in modules 33, 31 and 29. Since valve 43a is closed during production, the membrane in module 27 is operating under dead-end conditions. The main flow velocity parallel to the membrane surface is therefore greatest in module 35 and during production decreases in the main flow direction from module 35, 33, 31 and 29 to virtually zero in the last module 27.

It will be clear that the soiling rate increases in the same sequence through this decreasing longitudinal flow velocity and also increasing concentration of the substances to be separated out. At the end of this production cycle module 35 will be least soiled, and module 27 most soiled.

For cleaning of the system, the membranes are back-flushed with filtrate from the product tank 39.

For this back-flushing cycle the valves 42, 43, 43a and 38 are closed, and valves 41 and 44 and 44a are opened. All modules are then back-flushed with filtrate by means of pump 40. During this back-flushing cycle, module 27 is now operating in the dead-end situation, and the longitudinal flow velocity along the membranes in the direction of the main flow increases from a velocity of virtually zero in module 27 to a maximum velocity in module 35. This means that the least soiled module, module 27, is cleaned least efficiently, and the most soiled module, module 35, is cleaned most efficiently. In order also to clean module 27 well, during a second part of the back-flushing cycle valve 44 is closed and valves 43 and 43a are opened. This means that, through reversal of the main flow direction, the roles of the (now already cleaned) module 25 and the still lightly soiled module 27 are reversed, with the result that module 27 is still cleaned under the highest longitudinal flow velocity.

In order to obtain during back-flushing already at the outset a larger flow velocity of liquid, the valves 42, 43a, as well as the valves 44, 44a will be opened during some time. This will be advantageous for membranes having a low back-flushing flux. Through the opened valves 42 and 43a some liquid will then also be conveyed into the membrane system and leave the system through the valves 44 and 44a. Of course the pressure in the supply pipe must be lower than the pressure at the permeate side of the membrane (28), and is thus not equal to the usual working pressure during filtration. By subsequently closing the valves (43, 43a) as has been described above, the membrane modules will then be cleaned very effectively.

The membrane filtration system according to the invention is therefore characterized by such an arrangement of the membrane modules that during production, and viewed in the direction of the main flow, the first modules operate under cross-flow conditions, and the last module under dead-end conditions. During the back-flushing cycle, on the other hand, viewed in the direction of the main flow, the first module operates under dead-end conditions, and the remaining modules under cross-flow conditions. Very effective cleaning is achieved in this way.

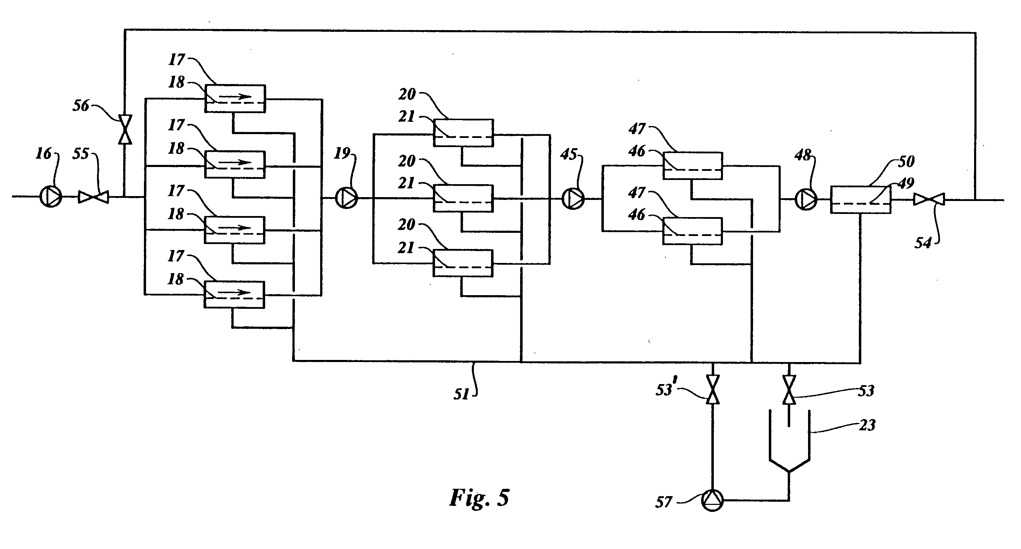

Fig. 5 shows a different embodiment of the membrane filtration system shown in Fig. 4, starting from the cross-flow system of the single-pass type explained in Fig. 3. More particularly, however, in this variant the concentrate obtained from the modules 20 connected in parallel is brought to pressure again and supplied by booster pump 45 to a third section of two modules 47 connected in parallel; and the concentrate obtained therefrom is fed to membrane filtration module 50 by means of booster pump 48. During the filtration cycle the valves 53', 54 and 56 are closed. The first section of in this case four modules 17 connected in parallel is consequently operating under cross-flow conditions, as are the second and third sections of three modules 20 and two modules 47 respectively connected in parallel. On the other hand, module 50 is operating under dead-end conditions, since valve 54 is closed during filtration. As has already been explained with reference to Fig. 4, at the end of the production cycle the first section of modules 17 will be least soiled, and module 50 most soiled.

It has been found that also in a system of the type shown in Fig. 5 the back-flushing cycle according to the invention can advantageously be used for cleaning the modules.

In the first variant of the cleaning system according to the invention the valves 55 and 53 are closed and valves 53' and 54 are opened. Filtrate is then fed back from tank 23 by means of pump 57.

The first section of modules 17 is then operating in the dead-end situation, while module 50 is operating in the cross-flow situation, with the result that module 50 is cleaned most efficiently. If desired, the section of modules 17 can be brought under cross-flow conditions and module 50 under dead-end conditions by closing valve 54 and opening valve 56, with the result that the direction of flow along the membrane in the modules is reversed. During cleaning, the pumps 19, 45 and 48 are at a standstill. These pumps can be flowed through in the reverse direction.

## Claims

1. Membrane filtration system, comprising a series of membrane filtration modules (27, 29, 31, 33, 35) with a first module and a last module, each of the modules having at least a housing, a semi-permeable membrane (28, 30, 32, 34, 36) accommodated in the housing, a supply pipe for liquid to be filtered, which supply connects to the housing at one side of the membrane, a concentrate discharge pipe which connects to the housing at the same side of the membrane, at the concentrate outflow-opening of the module, and a filtrate discharge pipe which connects to the housing at the other side of the membrane, in which system the modules are connected in series with regard to the liquid to be filtered and are connected in parallel with regard to the filtrate, wherein the concentrate outflow-opening of the last membrane filtration module (35), from said series of modules, viewed in the direction of flow of the liquid to be filtered, can be shut off during the filtration cycle, said system further comprising;
- a feed pump (26) and a supply pipe connected thereto for feeding liquid to be filtered to the first module (27),
- a first valve (44a) in the concentrate discharge pipe of the last module (35),
- a filtrate collecting pipe (37) to which all filtrate discharge pipes of the modules are connected, which filtrate collecting pipe is connected to
- a product tank (39) for receiving the filtrate from said filtrate collecting pipe (37)
- a bypass pipe connected to the supply of the first module (27) and to the concentrate discharge pipe of the last module (35), upstream of the first valve (44a) in said concentrate discharge pipe,
- a valve (38) in the connection of the filtrate collecting pipe (37) to the product tank (39)
- a pump (40) in communication via a corresponding valve (41) to the filtrate collecting pipe (37) for feeding filtrate from the product tank (39) to the filtrate collecting pipe (37),
- a second valve (42) and a third valve (43a) in the supply pipe connected to the first module (27)
- the bypass pipe being connected to said supply pipe to the first module (27) between the second valve (42) and the third valve (43a)
- a fourth valve (44) in the concentrate discharge pipe of the last module (35) upstream of the connection of the bypass pipe.

2. Membrane filtration system, comprising a series of membrane filtration modules (27, 29, 31, 33, 35) with a first module and a last module, each of the modules having at least a housing, a semi-permeable membrane (28, 30, 32, 34, 36) accommodated in the housing, a supply pipe for liquid to be filtered, which supply connects to the housing at one side of the membrane, a concentrate discharge pipe which connects to the housing at the same side of the membrane, at the concentrate outflow-opening of the module, and a filtrate discharge pipe which connects to the housing at the other side of the membrane, in which system the modules are connected in series with regard to the liquid to be filtered and are connected in parallel with regard to the filtrate, wherein the concentrate outflow-opening of the last membrane filtration module (35), from said series of modules, viewed in the direction of flow of the liquid to be filtered, can be shut off during the filtration cycle, said system further comprising;
- a feed pump (16) and a supply pipe connected thereto for feeding liquid to be filtered to the first module (27),
- a first valve (54) in the concentrate discharge pipe of the last module (35),
- a filtrate collecting pipe (51) to which all filtrate discharge pipes of the modules are connected, which filtrate collecting pipe is connected to
- a product tank (23) for receiving the filtrate from said filtrate collecting pipe,
- a bypass pipe connected to the supply of the first module (27) and to the concentrate discharge pipe of the last module (35), downstream of the first valve (54) in said concentrate discharge pipe,
- a valve (53) in the connection of the filtrate collecting pipe to the product tank,
- a pump (57) in communication via a corresponding valve to the filtrate collecting pipe for feeding filtrate from the product tank to the filtrate collecting pipe,
- a second valve (55) in the supply pipe connected to the first module (27)
- the bypass pipe being connected to said supply pipe to the first module (27) after the second valve (55)
- a third valve (54) in the concentrate discharge pipe of the last module (35) upstream of the connection of the bypass pipe,
wherein each membrane filtration module ((27, 29, 31, 33, 35) present in the membrane filtration system comprises a combination of several membrane filtration modules (17, 20, 47) in which the liquid supply pipes and the concentrate discharge pipes respectively are connected in parallel and connected to the liquid supply pipe and the concentrate discharge pipe respectively of the system or of an adjacent combination of membrane filtration modules, provided that, viewed in the direction of flow of the liquid to be filtered, each following combination of membrane filtration modules comprises the same or a lower number of modules.

3. Method for subjecting a liquid to membrane filtration, using a membrane filtration system consisting of a series of membrane filtration modules (27, 29, 31, 33, 35) each of the membrane filtration modules having at least a housing, a semi-permeable membrane (28, 30, 32, 34, 36) accommodated in the housing, a supply pipe for liquid to be filtered, which supply pipe connects to the housing a one side of the membrane, a concentrate discharge pipe which connects to the housing at the same side of the membrane, at the concentrate outflow-opening of the module, and a filtrate discharge pipe which connects to the housing at the other side of the membrane, in which system the modules are connected in series with regard to the liquid to be filtered and are connected in parallel with regard to filtrate, **characterized in that** in operation the concentrate discharge pipe of the last membrane filtration module (35) of the series of modules viewed in the direction of flow of the liquid to be filtered, is shut off, in order to obtain an essentially dead-end situation in the above-mentioned last membrane filtration module and an essentially cross-flow situation in at least the first membrane filtration module (27) of the series.

4. Method for subjecting a liquid to membrane filtration, using a membrane filtration system consisting of a series of membrane filtration modules (27, 29, 31, 33, 35) each of the membrane filtration modules having at least a housing, a semi-permeable membrane (28, 30, 32, 34, 36) accommodated in the housing, a supply pipe for liquid to be filtered, which supply pipe connects to the housing at one side of the membrane, a concentrate discharge pipe which connects to the housing at the same side of the membrane, and a filtrate discharge pipe which connects to the housing at the other side of the membrane, in which system the modules are connected in series with regard to the liquid to be filtered and are connected in parallel with regard to the filtrate, **characterized in that** in operation the supply pipe of the first membrane filtration module (27) of the series, viewed in the direction of flow of the liquid to be filtered, is shut off, and the liquid to be filtered is supplied to the last module (35), in order to obtain an essentially dead-end situation in the above-mentioned first membrane filtration module and an essentially cross-flow situation in at least the last membrane filtration module (35) of the series.

5. Method for cleaning a membrane filtration system consisting of a series of membrane filtration modules (27, 29, 31, 33, 35), each of the membrane filtration modules having at least a housing, a semi-permeable membrane (28, 30, 32, 34, 36) accommodated in the housing, a supply pipe for liquid to be filtered, which supply pipe connects to the housing at one side of the membrane, a concentrate discharge pipe which connects to the housing at the same side of the membrane, and a filtrate discharge pipe which connects to the housing at the other side of the membrane, in which system the modules are connected in series with regard to the liquid to be filtered and are connected in parallel with regard to the filtrate, while the filtrate discharge pipes of all modules open out into a filtrate collecting pipe, **characterized in that** for cleaning, the supply pipe for liquid to be filtered in the first membrane filtration module (27), viewed in the direction of flow of said liquid, is shut off, and the concentrate discharge pipe of the last membrane filtration module (35), viewed in the direction of flow of the liquid to be filtered, is opened, and filtrate is supplied through the filtrate collecting pipe to the membrane filtration modules (27, 29, 31, 33, 35), in order to obtain an essentially dead-end situation in the above-mentioned first membrane filtration module (27) and an essentially cross-flow situation in the above-mentioned last membrane filtration module (35).

6. Method for cleaning a membrane filtration system consisting of a series of membrane filtration modules (27, 29, 31, 33, 35), each of the membrane filtration modules having at least a housing, a semi-permeable membrane (28, 30, 32, 34, 36) accommodated in the housing, a supply pipe for liquid to be filtered, which supply pipe connects to the housing at one side of the membrane, a concentrate discharge pipe which connects to the housing at the same side of the membrane, and a filtrate discharge pipe which connects to the housing at the other side of the membrane, in which system the modules are connected in series with regard to the liquid to be filtered and are connected in parallel with regard to the filtrate, while the filtrate discharge pipes of all modules open out into a filtrate collecting pipe, **characterized in that** the membrane filtration system is provided with a bypass pipe which can be shut off, lying between the liquid supply pipe of the first module (27) and the concentrate discharge pipe of the last module (35) of the modules (27, 29, 31, 33, 35) connected in series and, for cleaning, the supply pipe for liquid to be filtered in the first membrane filtration module (27), viewed in the direction of flow of said liquid, is shut off, said bypass pipe is opened, the concentrate discharge pipe of the last membrane filtration module (35), viewed in the direction of flow of said liquid to be filtered, is shut off, and filtrate is supplied through the filtrate collecting pipe to the membrane filtration modules, in order to obtain an essentially dead-end situation in the above-mentioned last module (35) and an essentially cross-flow situation in the above-mentioned first module (27).

## Patentansprüche

1. Membranfiltrationssystem, das folgendes umfasst: eine Reihe von Membranfiltrationsmodulen (27, 29, 31, 33, 35) mit einem ersten Modul und einem letzten Modul, wobei jedes der Module wenigstens ein Gehäuse hat, eine in dem Gehäuse untergebrachte halbdurchlässige Membran (28, 30, 32, 34, 36), ein Zuleitungsrohr für zu filtrierende Flüssigkeit, wobei die Zuleitung auf einer Seite der Membran mit dem Gehäuse verbunden ist, ein Konzentratableitungsrohr, das auf derselben Seite der Membran, an der Konzentratausströmöffnung des Moduls, mit dem Gehäuse verbunden ist, und ein Filtratableitungsrohr, das auf der anderen Seite der Membran mit dem Gehäuse verbunden ist, wobei die Module in dem System in Bezug auf die zu filtrierende Flüssigkeit in Reihe geschaltet sind und in Bezug auf das Filtrat parallelgeschaltet sind, wobei die Konzentratausströmöffung des letzten Membranfiltrationsmoduls (35) aus der Reihe von Modulen, gesehen in Strömungsrichtung der zu filtrierenden Flüssigkeit, während des Filtrationszyklus abgesperrt werden kann, wobei das System ferner folgendes umfasst:
- eine Förderpumpe (26) und ein damit verbundenes Zuleitungsrohr, um dem ersten Modul (27) zu filtrierende Flüssigkeit zuzuführen,
- ein erstes Ventil (44a) in dem Konzentratableitungsrohr des letzten Moduls (35),
- ein Filtratsammelrohr (37), mit dem alle Filtratableitungsrohre der Module verbunden sind, wobei das Filtratsammelrohr verbunden ist mit
- einem Produktbehälter (39) zur Aufnahme des Filtrats von dem Filtratsammelrohr (37),
- einem Umgehungsrohr, das mit dem Vorrat des ersten Moduls (27) und, stromaufwärts von dem ersten Ventil (44a) in dem Konzentratableitungsrohr, mit dem Konzentratableitungsrohr des letzten Moduls (35) verbunden ist,
- einem Ventil (38) in der Verbindung des Filtratsammelrohrs (37) mit dem Produktbehälter (39),
- einer Pumpe (40), die über ein entsprechendes Ventil (41) mit dem Filtratsammelrohr (37) verbunden ist, um Filtrat von dem Produktbehälter (39) zu dem Filtratsammelrohr (37) zu befördern,
- einem zweiten Ventil (42) und einem dritten Ventil (43a) in dem mit dem ersten Modul (27) verbundenen Zuleitungsrohr,
- wobei das Umgehungsrohr zwischen dem zweiten Ventil (42) und dem dritten Ventil (43a) mit dem Zuleitungsrohr zu dem ersten Modul (27) verbunden ist,
- einem vierten Ventil (44) in dem Konzentratableitungsrohr des letzten Moduls (35) stromaufwärts von dem Anschluß des Umgehungsrohres.

2. Membranfiltrationssystem, das folgendes umfasst: eine Reihe von Membranfiltrationsmodulen (27, 29, 31, 33, 35) mit einem ersten Modul und einem letzten Modul, wobei jedes der Module wenigstens ein Gehäuse hat, eine in dem Gehäuse untergebrachte halbdurchlässige Membran (28, 30, 32, 34, 36), ein Zuleitungsrohr für zu filtrierende Flüssigkeit, wobei die Zuleitung auf einer Seite der Membran mit dem Gehäuse verbunden ist, ein Konzentratableitungsrohr, das auf derselben Seite der Membran, an der Konzentratausströmöffnung des Moduls, mit dem Gehäuse verbunden ist, und ein Filtratableitungsrohr, das auf der anderen Seite der Membran mit dem Gehäuse verbunden ist, wobei die Module in dem System in Bezug auf die zu filtrierende Flüssigkeit in Reihe geschaltet sind und in Bezug auf das Filtrat parallelgeschaltet sind, wobei die Konzentratausströmöffnung des letzten Membranfiltrationsmoduls (35) aus der Reihe von Modulen, gesehen in Strömungsrichtung der zu filtrierenden Flüssigkeit, während des Filtrationszyklus abgesperrt werden kann, wobei das System ferner folgendes umfasst:
- eine Förderpumpe (16) und ein damit verbundenes Zuleitungsrohr, um dem ersten Modul (27) zu filtrierende Flüssigkeit zuzuführen,
- ein erstes Ventil (54) in dem Konzentratableitungsrohr des letzten Moduls (35),
- ein Filtratsammelrohr (51), mit dem alle Filtratableitungsrohre der Module verbunden sind, wobei das Filtratsammelrohr verbunden ist mit
- einem Produktbehälter (23) zur Aufnahme des Filtrats von dem Filtratsammelrohr,
- einem Umgehungsrohr, das mit dem Vorrat des ersten Moduls (27) und, stromabwärts von dem ersten Ventil (54) in dem Konzentratableitungsrohr, mit dem Konzentratableitungsrohr des letzten Moduls (35) verbunden ist,
- einem Ventil (59) in der Verbindung des Filtratsammelrohrs mit dem Produktbehälter,
- einer Pumpe (57), die über ein entsprechendes Ventil mit dem Filtratsammelrohr verbunden ist, um Filtrat von dem Produktbehälter zu dem Filtratsammelrohr zu befördern,
- einem zweiten Ventil (55) in dem mit dem ersten Modul (27) verbundenen Zuleitungsrohr,
- wobei das Umgehungsrohr hinter dem zweiten Ventil (55) mit dem Zuleitungsrohr zu dem ersten Modul (27) verbunden ist,
- einem dritten Ventil (54) in dem Konzentratableitungsrohr des letzten Moduls (35) stromaufwärts von dem Anschluß des Umgehungsrohres,
wobei jedes in dem Membranfiltrationssystem vorhandene Membranfiltrationsmodul (27, 29, 31, 33, 35) eine Kombination aus mehreren Membranfiltrationsmodulen (17, 20, 47) umfasst, bei der die Flüssigkeitszuleitungsrohre bzw. die Konzentratableitungsrohre parallelgeschaltet sind und mit dem Flüssigkeitszuleitungsrohr bzw. dem Konzentratableitungsrohr des Systems oder einer benachbarten Kombination von Membranfiltrationsmodulen verbunden sind, vorausgesetzt dass, gesehen in Strömungsrichtung der zu filtrierenden Flüssigkeit, jede folgende Kombination von Membranfiltrationsmodulen dieselbe oder eine niedrigere Anzahl von Modulen umfasst.

3. Verfahren zur Membranfiltration einer Flüssigkeit unter Verwendung eines Membranfiltrationssystems, das aus einer Reihe von Membranfiltrationsmodulen (27, 29, 31, 33, 35) besteht, wobei jedes der Membranfiltrationsmodule wenigstens ein Gehäuse hat, eine in dem Gehäuse untergebrachte halbdurchlässige Membran (28, 30, 32, 34, 36), ein Zuleitungsrohr für zu filtrierende Flüssigkeit, das auf einer Seite der Membran mit dem Gehäuse verbunden ist, ein Konzentratableitungsrohr, das auf derselben Seite der Membran, an der Konzentratausströmöffnung des Moduls, mit dem Gehäuse verbunden ist, und ein Filtratableitungsrohr, das auf der anderen Seite der Membran mit dem Gehäuse verbunden ist, wobei die Module in dem System in Bezug auf die zu filtrierende Flüssigkeit in Reihe geschaltet sind und in Bezug auf das Filtrat parallelgeschaltet sind, **dadurch gekennzeichnet, dass** im Betrieb das Konzentratableitungsrohr des letzten Membranfiltrationsmoduls (35) der Reihe von Modulen, gesehen in Strömungsrichtung der zu filtrierenden Flüssigkeit, abgesperrt wird, um in dem obengenannten letzten Membranfiltrationsmodul ein im Wesentlichen totes Ende zu erhalten und zumindest in dem ersten Membranfiltrationsmodul (27) der Reihe im Wesentlichen eine Querdurchströmungssituation zu erhalten.

4. Verfahren zur Membranfiltration einer Flüssigkeit unter Verwendung eines Membranfiltrationssystems, das aus einer Reihe von Membranfiltrationsmodulen (27, 29, 31, 33, 35) besteht, wobei jedes der Membranfiltrationsmodule wenigstens ein Gehäuse hat, eine in dem Gehäuse untergebrachte halbdurchlässige Membran (28, 30, 32, 34, 36), ein Zuleitungsrohr für zu filtrierende Flüssigkeit, das auf einer Seite der Membran mit dem Gehäuse verbunden ist, ein Konzentratableitungsrohr, das auf derselben Seite der Membran mit dem Gehäuse verbunden ist, und ein Filtratableitungsrohr, das auf der anderen Seite der Membran mit dem Gehäuse verbunden ist, wobei die Module in dem System in Bezug auf die zu filtrierende Flüssigkeit in Reihe geschaltet sind und in Bezug auf das Filtrat parallelgeschaltet sind, **dadurch gekennzeichnet, dass** im Betrieb das Zuleitungsrohr des ersten Membranfiltrationsmoduls (27) der Reihe, gesehen in Strömungsrichtung der zu filtrierenden Flüssigkeit, abgesperrt wird und die zu filtrierende Flüssigkeit dem letzten Modul (35) zugeführt wird, um in dem obengenannten ersten Membranfiltrationsmodul ein im Wesentlichen totes Ende zu erhalten und zumindest in dem letzten Membranfiltrationsmodul (35) der Reihe im Wesentlichen eine Querdurchströmungssituation zu erhalten.

5. Verfahren zur Reinigung eines Membranfiltrationssystems, das aus einer Reihe von Membranfiltrationsmodulen (27, 29, 31, 33, 35) besteht, wobei jedes der Membranfiltrationsmodule wenigstens ein Gehäuse hat, eine in dem Gehäuse untergebrachte halbdurchlässige Membran (28, 30, 32, 34, 36), ein Zuleitungsrohr für zu filtrierende Flüssigkeit, das auf einer Seite der Membran mit dem Gehäuse verbunden ist, ein Konzentratableitungsrohr, das auf derselben Seite der Membran mit dem Gehäuse verbunden ist, und ein Filtratableitungsrohr, das auf der anderen Seite der Membran mit dem Gehäuse verbunden ist, wobei die Module in dem System in Bezug auf die zu filtrierende Flüssigkeit in Reihe geschaltet sind und in Bezug auf das Filtrat parallelgeschaltet sind, während die Filtratableitungsrohre aller Module in ein Filtratsammelrohr münden, **dadurch gekennzeichnet, dass** zum Reinigen das Zuleitungsrohr für in dem ersten Membranfiltrationsmodul (27) zu filtrierende Flüssigkeit, gesehen in Strömungsrichtung der Flüssigkeit, abgesperrt wird und das Konzentratableitungsrohr des letzten Membranfiltrationsmoduls (35), gesehen in Strömungsrichtung der zu filtrierenden Flüssigkeit, geöffnet wird und Filtrat durch das Filtratsammelrohr den Membranfiltrationsmodulen (27, 29, 31, 33, 35) zugeführt wird, um in dem obengenannten ersten Membranfiltrationsmodul (27) ein im Wesentlichen totes Ende zu erhalten und in dem obengenannten letzten Membranfiltrationsmodul (35) im Wesentlichen eine Querdurchströmungssituation zu erhalten.

6. Verfahren zum Reinigen eines Membranfiltrationssystems, das aus einer Reihe von Membranfiltrationsmodulen (27, 29, 31, 33, 35) besteht, wobei jedes der Membranfiltrationsmodule wenigstens ein Gehäuse hat, eine in dem Gehäuse untergebrachte halbdurchlässige Membran (28, 30, 32, 34, 36), ein Zuleitungsrohr für zu filtrierende Flüssigkeit, das auf einer Seite der Membran mit dem Gehäuse verbunden ist, ein Konzentratableitungsrohr, das auf derselben Seite der Membran mit dem Gehäuse verbunden ist, und ein Filtratableitungsrohr, das auf der anderen Seite der Membran mit dem Gehäuse verbunden ist, wobei die Module in dem System in Bezug auf die zu filtrierende Flüssigkeit in Reihe geschaltet sind und in Bezug auf das Filtrat parallelgeschaltet sind, während die Filtratableitungsrohre aller Module in ein Filtratsammelrohr münden, **dadurch gekennzeichnet, dass** das Membranfiltrationssystem mit einem Umgehungsrohr versehen ist, das abgesperrt werden kann und zwischen dem Flüssigkeitszuleitungsrohr des ersten Moduls (27) und dem Konzentratableitungsrohr des letzten Moduls (35) der in Reihe geschalteten Module (27, 29, 31, 33, 35) liegt, und dass zum Reinigen das Zuleitungsrohr für in dem ersten Membranfiltrationsmodul (27) zu reinigende Flüssigkeit, gesehen in Strömungsrichtung der Flüssigkeit, abgesperrt wird, das Umgehungsrohr geöffnet wird, das Konzentratableitungsrohr des letzten Membranfiltrationsmoduls (35), gesehen in Strömungsrichtung der zu filtrierenden Flüssigkeit, abgesperrt wird, und Filtrat durch das Filtratsammelrohr den Membranfiltrationsmodulen zugeführt wird, um in dem obengenannten letzten Modul (35) ein im Wesentlichen totes Ende zu erhalten und in dem obengenannten ersten Modul (27) im Wesentlichen eine Querdurchströmungssituation zu erhalten.

## Revendications

1. Système de filtration à membranes, comprenant une série de modules de filtration à membrane (27, 29, 31, 33, 35) pourvue d'un premier module et d'un dernier module, chacun des modules comportant au moins un boîtier, une membrane semi-perméable (28, 30, 32, 34, 36) logée dans le boîtier, un tuyau d'alimentation en liquide à filtrer, laquelle alimentation est raccordée au boîtier d'un côté de la membrane, un tuyau de décharge de concentré qui est raccordé au boîtier du même côté de la membrane au niveau de l'ouverture de sortie de concentré du module, et un tuyau de décharge de filtrat qui est raccordé au boîtier de l'autre côté de la membrane, dans lequel système les modules sont raccordés en série par rapport au liquide à filtrer et sont raccordés en parallèle par rapport au filtrat, dans lequel l'ouverture de sortie de concentré du dernier module de filtration à membrane (35), par rapport à ladite série de modules, prise dans la direction d'écoulement du liquide à filtrer, peut être fermée pendant le cycle de filtration, ledit système comprenant en outre ;
une pompe de délivrance (26) et un tuyau d'alimentation raccordé à celle-ci dans le but de délivrer du liquide à filtrer au premier module (27),
une première vanne (44a) située dans le tuyau de décharge de concentré du dernier module (35),
un tuyau de récupération de filtrat (37) auquel sont raccordés tous les tuyaux de décharge de filtrat des modules, lequel tuyau de récupération de filtrat est raccordé à
un réservoir de produit (39) servant à recevoir le filtrat provenant dudit tuyau de récupération de filtrat (37)
un tuyau de dérivation raccordé à l'alimentation du premier module (27) et au tuyau de décharge de concentré du dernier module (35), en amont de la première vanne (44a) située dans ledit tuyau de décharge de concentré,
une vanne (38) située dans le raccord du tuyau de récupération de filtrat (37) avec le réservoir de produit (39)
une pompe (40) en communication, via une vanne correspondante (41), avec le tuyau de récupération de filtrat (37) dans le but de délivrer le filtrat provenant dudit réservoir de produit (39) au tuyau de récupération de filtrat (37),
une deuxième vanne (42) et une troisième vanne (43a) situées dans le tuyau d'alimentation raccordé au premier module (27)
le tuyau de dérivation étant raccordé audit tuyau d'alimentation dudit premier module (27) entre la deuxième vanne (42) et la troisième vanne (43a)
une quatrième vanne (44) située dans le tuyau de décharge de concentré du dernier module (35) en amont du raccord du tuyau de dérivation.

2. Système de filtration à membranes, comprenant une série de modules de filtration à membrane (27, 29, 31, 33, 35) pourvue d'un premier module et d'un dernier module, chacun des modules comprenant au moins un boîtier, une membrane semi-perméable (28, 30, 32, 34, 36) logée dans le boîtier, un tuyau d'alimentation en liquide à filtrer, laquelle alimentation est raccordée au boîtier d'un côté de la membrane, un tuyau de décharge de concentré qui est raccordé au boîtier du même côté de la membrane au niveau de l'ouverture de sortie de concentré du module, et un tuyau de décharge de filtrat qui est raccordé au boîtier de l'autre côté de la membrane, dans lequel système les modules sont raccordés en série par rapport au liquide à filtrer et sont raccordés en parallèle par rapport au filtrat, dans lequel l'ouverture de sortie de concentré du dernier module de filtration à membrane (35), par rapport à ladite série de modules, prise dans la direction d'écoulement du liquide à filtrer, peut être fermée pendant le cycle de filtration, ledit système comprenant en outre ;
une pompe de délivrance (16) et un tuyau d'alimentation raccordé à celle-ci dans le but de délivrer du liquide à filtrer au premier module (27),
une première vanne (54) située dans le tuyau de décharge de concentré du dernier module (35),
un tuyau de récupération de filtrat (51) auquel sont raccordés tous les tuyaux de décharge de filtrat des modules, lequel tuyau de récupération de filtrat est raccordé à
un réservoir de produit (23) servant à recevoir le filtrat provenant dudit tuyau de récupération de filtrat
un tuyau de dérivation raccordé à l'alimentation du premier module (27) et au tuyau de décharge de concentré du dernier module (35), en aval de la première vanne (54) située dans ledit tuyau de décharge de concentré,
une vanne (59) située dans le raccord du tuyau de récupération de filtrat avec le réservoir de produit
une pompe (57) en communication, via une vanne correspondante, avec le tuyau de récupération de filtrat dans le but de délivrer le filtrat provenant du réservoir de produit au tuyau de récupération de filtrat,
une deuxième vanne (55) située dans le tuyau d'alimentation raccordé au premier module (27)
le tuyau de dérivation étant raccordé audit tuyau d'alimentation dudit premier module (27) après la deuxième vanne (55)
une troisième vanne (54) située dans le tuyau de décharge de concentré du dernier module (35) en amont du raccord du tuyau de dérivation,
dans lequel chaque module de filtration à membrane (27, 29, 31, 33, 35) présente dans le système de filtration à membrane comprend une combinaison de plusieurs modules de filtration à membrane (17, 20, 47) dans laquelle les tuyaux d'alimentation en liquide et les tuyaux de décharge de concentré sont raccordés respectivement en parallèle et sont raccordés respectivement au tuyau d'alimentation en liquide et au tuyau de décharge de concentré du système, ou une combinaison adjacente de modules de filtration à membrane, du moment que, prise dans la direction d'écoulement du liquide à filtrer, chaque combinaison qui se suit de modules de filtration à membrane comprend un nombre identique ou inférieur de modules.

3. Procédé pour soumettre un liquide à une filtration par membranes, en utilisant un système de filtration à membranes constitué d'une série de modules de filtration à membrane (27, 29, 31, 33, 35), chacun des modules de filtration à membrane comportant au moins un boîtier, une membrane semi-perméable (28, 30, 32, 34, 36) logée dans le boîtier, un tuyau d'alimentation en liquide à filtrer, lequel tuyau d'alimentation est raccordé au boîtier d'un côté de la membrane, un tuyau de décharge de concentré qui est raccordé au boîtier du même côté de la membrane au niveau de l'ouverture de sortie de concentré du module, et un tuyau de décharge de filtrat qui est raccordé au boîtier de l'autre côté de la membrane, dans lequel système les modules sont raccordés en série par rapport au liquide à filtrer et sont raccordés en parallèle par rapport au filtrat, **caractérisé en ce que**, en fonctionnement, le tuyau de décharge de concentré du dernier module de filtration à membrane (35) de la série de modules, prise dans la direction d'écoulement du liquide à filtrer, est fermé afin d'obtenir une situation essentiellement de zone morte dans le dernier module de filtration à membrane mentionné ci-dessus, et une situation d'écoulement essentiellement transversal dans au moins le premier module de filtration à membrane (27) de la série.

4. Procédé pour soumettre un liquide à une filtration par membranes, en utilisant un système de filtration à membranes constitué d'une série de modules de filtration à membrane (27, 29, 31, 33, 35), chacun des modules de filtration à membrane comportant au moins un boîtier, une membrane semi-perméable (28, 30, 32, 34, 36) logée dans le boîtier, un tuyau d'alimentation en liquide à filtrer, lequel tuyau d'alimentation est raccordé au boîtier d'un côté de la membrane, un tuyau de décharge de concentré qui est raccordé au boîtier du même côté de la membrane, et un tuyau de décharge de filtrat qui est raccordé au boîtier de l'autre côté de la membrane, dans lequel système les modules sont raccordés en série par rapport au liquide à filtrer et sont raccordés en parallèle par rapport au filtrat, **caractérisé en ce que**, en fonctionnement, le tuyau d'alimentation du premier module de filtration à membrane (27) de la série, prise dans la direction d'écoulement du liquide à filtrer, est fermé, et **en ce que** le liquide à filtrer est délivré au dernier module (35) afin d'obtenir une situation essentiellement de zone morte dans le premier module de filtration à membrane mentionné ci-dessus et une situation d'écoulement essentiellement transversal dans au moins le dernier module de filtration à membrane (35) de la série.

5. Procédé pour nettoyer un système de filtration à membranes constitué d'une série de modules de filtration à membrane (27, 29, 31, 33, 35), chacun des modules de filtration à membrane comportant au moins un boîtier, une membrane semi-perméable (28, 30, 32, 34, 36) logée dans le boîtier, un tuyau d'alimentation en liquide à filtrer, lequel tuyau d'alimentation est raccordé au boîtier d'un côté de la membrane, un tuyau de décharge de concentré qui est raccordé au boîtier du même côté de la membrane, et un tuyau de décharge de filtrat qui est raccordé au boîtier de l'autre côté de la membrane, dans lequel système les modules sont raccordés en série par rapport au liquide à filtrer et sont raccordés en parallèle par rapport au filtrat, tandis que les tuyaux de décharge de filtrat de tous les modules débouchent dans un tuyau de récupération de filtrat, **caractérisé en ce que**, pour le nettoyage, le tuyau d'alimentation en liquide à filtrer du premier module de filtration à membrane (27), pris dans la direction d'écoulement du liquide, est fermé, **en ce que** le tuyau de décharge de concentré du dernier module de filtration à membrane (35), pris dans la direction d'écoulement du liquide à filtrer, est ouvert, et **en ce que** du filtrat est délivré par l'intermédiaire du tuyau de récupération de filtrat aux modules de filtration à membrane (27, 29, 31, 33, 35), afin d'obtenir une situation essentiellement de zone morte dans le premier module de filtration à membrane mentionné ci-dessus (27) et une situation d'écoulement essentiellement transversal dans le dernier module de filtration à membrane mentionné ci-dessus (35).

6. Procédé pour nettoyer un système de filtration à membranes constitué d'une série de modules de filtration à membrane (27, 29, 31, 33, 35), chacun des modules de filtration à membrane comportant au moins un boîtier, une membrane semi-perméable (28, 30, 32, 34, 36) logée dans le boîtier, un tuyau d'alimentation en liquide à filtrer, lequel tuyau d'alimentation est raccordé au boîtier d'un côté de la membrane, un tuyau de décharge de concentré qui est raccordé au boîtier du même côté de la membrane, et un tuyau de décharge de filtrat qui est raccordé au boîtier de l'autre côté de la membrane, dans lequel système les modules sont raccordés en série par rapport au liquide à filtrer et sont raccordés en parallèle par rapport au filtrat, tandis que les tuyaux de décharge de filtrat de tous les modules débouchent dans un tuyau de récupération de filtrat, **caractérisé en ce que** le système de filtration à membranes est pourvu d'un tuyau de dérivation qui peut être fermé, se trouvant entre le tuyau d'alimentation en liquide du premier module (27) et le tuyau de décharge de concentré du dernier module (35) des modules (27, 29, 31, 33, 35) raccordés en série, et **en ce que**, pour nettoyage, le tuyau d'alimentation en liquide à filtrer du premier module de filtration à membrane (27), pris dans la direction d'écoulement dudit liquide, est fermé, ledit tuyau de dérivation est ouvert, le tuyau de décharge de concentré du dernier module de filtration à membrane (35), pris dans la direction d'écoulement dudit liquide à filtrer, est fermé, et **en ce que** du filtrat est délivré par l'intermédiaire du tuyau de récupération de filtrat aux modules de filtration à membrane, afin d'obtenir une situation essentiellement de zone morte dans le dernier module mentionné ci-dessus (35) et une situation d'écoulement essentiellement transversal dans le premier module mentionné ci-dessus (27).
